# EUROPEAN PATENT APPLICATION

(11) **EP 4 280 327 A1**
(43) Date of publication of application: **22.11.2023**
(21) Application number: 22189635.0
(22) Date of filing: 10.08.2022
(51) Int. Cl.: H01M 10/04, B60L 50/64, H01M 50/244, H01M 50/264, H01M 50/289, H01M 50/249

(54) **BATTERY PACK, METHOD OF ASSEMBLING BATTERY PACK AND BATTERY CLUSTER**

(30) Priority: 18.05.2022 CN 202210544415
(71) Applicant: CALB Co., Ltd., Changzhou City, Jiangsu Province (CN)
(72) Inventor: LI, Wei, Changzhou City, Jiangsu Province (CN); ZHENG, Licheng, Changzhou City, Jiangsu Province (CN); ZHU, Suran, Changzhou City, Jiangsu Province (CN); SHI, Tengteng, Changzhou City, Jiangsu Province (CN); ZHOU, Shiyou, Changzhou City, Jiangsu Province (CN)
(74) Representative: Becker, Eberhard

(57) **Abstract**

The disclosure relates to the technical field of batteries and provides a battery pack, a method of assembling the battery pack, and a battery cluster. The battery pack includes a battery box (10), a first battery apparatus including a plurality of first single batteries (20) stacked in a first direction, a second battery apparatus including a second single battery (30) and disposed in the battery box (10) together with the first battery apparatus in the first direction, and a first baffle plate (40) located between the second battery apparatus and the first battery apparatus. The first baffle plate (40) is detachably connected to the battery box (10) to press the first battery apparatus through moving relative to the battery box (10).

## Description

### BACKGROUND

### Technical Field

The disclosure relates to the technical field of batteries and in particular, relates to a battery pack, a method of assembling the battery pack, and a battery cluster.

### Description of Related Art

After a plurality of batteries are stacked in a battery pack, when the batteries are pressed by a baffle plate, the outermost battery may move considerably. As a result, the batteries may be excessively pressed, and the performance of the battery pack is thereby affected.

### SUMMARY

The disclosure provides a battery pack, a method of assembling the battery pack, and a battery cluster in which pressing applied on batteries is reduced, and the performance of the battery pack is improved.

According to the first aspect of the disclosure, the disclosure provides a battery pack including a battery box, a first battery apparatus, a second battery apparatus, and a first baffle plate.

The first battery apparatus includes a plurality of first single batteries stacked in a first direction.

The second battery apparatus includes a second single battery, and the second battery apparatus and the first battery apparatus are disposed in the battery box in the first direction.

The first baffle plate is located between the second battery apparatus and the first battery apparatus.

The first baffle plate is detachably connected to the battery box to press the first battery apparatus through moving relative to the battery box.

According to the second aspect of the disclosure, the disclosure further provides a method of assembling a battery pack, and the method includes the following steps.

A first baffle plate is enabled to move relative to a battery box in a first direction to press a plurality of first single batteries in the battery box, and the first single batteries are stacked in the first direction.

The first baffle plate is connected to the battery box.

According to the third aspect of the disclosure, the disclosure further provides a battery cluster including the said battery pack.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view illustrating a structure of a battery pack according to an exemplary embodiment.
FIG. 2 is a schematic view one illustrating the structure of the battery pack with first single batteries and second single batteries hidden according to an exemplary embodiment.
FIG. 3 is a schematic view two illustrating the structure of the battery pack with the first single batteries and the second single batteries hidden according to an exemplary embodiment.
FIG. 4 is a schematic view illustrating a structure of a connection piece in the battery pack according to an exemplary embodiment.
FIG. 5 is a schematic view illustrating a structure of a first baffle plate in the battery pack according to an exemplary embodiment.
FIG. 6 is a schematic view three illustrating the structure of the battery pack with the first single batteries and the second single batteries hidden according to an exemplary embodiment.
FIG. 7 is a schematic view one illustrating a structure of a support piece in the battery pack according to an exemplary embodiment.
FIG. 8 is a schematic view two illustrating the structure of the support piece in the battery pack according to an exemplary embodiment.
FIG. 9 is a schematic view illustrating matching of the support piece and the first single batteries in the battery pack according to an exemplary embodiment.
FIG. 10 is a flow chart of a method of assembling a battery pack according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

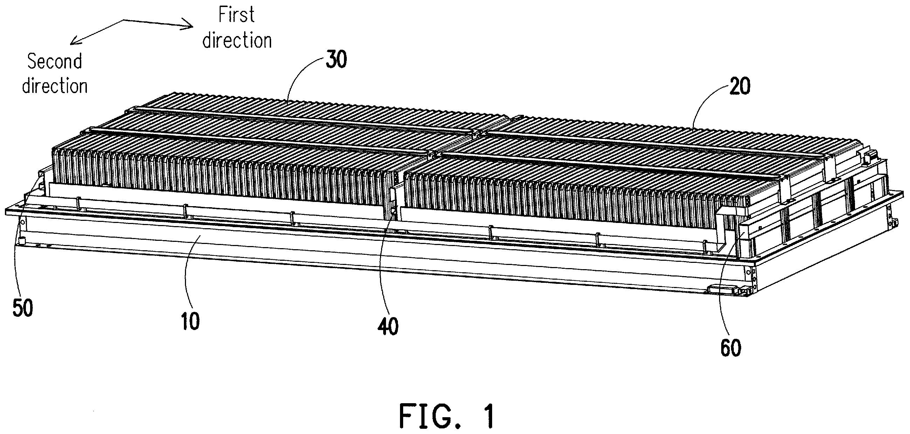

The present embodiment provides a battery pack. As shown in FIG. 1 to FIG. 2, the battery pack includes a battery box 10, a first battery apparatus, a second battery apparatus, and a first baffle plate 40. The first battery apparatus includes a plurality of first single batteries 20 stacked in a first direction, and the second battery apparatus includes a second single battery 30. The second battery apparatus and the first battery apparatus are disposed in the battery box 10 in the first direction, and the first baffle plate 40 is located between the second battery apparatus and the first battery apparatus. The first baffle plate 40 is detachably connected to the battery box 10 to press the first battery apparatus through moving relative to the battery box 10.

In the battery pack provided by this embodiment, by arranging the first baffle plate 40 to be detachably connected to the battery box 10 to press the first battery apparatus through moving relative to the battery box 10, the first baffle plate 40 is not fixedly disposed relative to the battery box 10 but is movably disposed relative to the battery box 10 instead. After the first single batteries 20 of the first battery apparatus are stacked in the first direction, the first baffle plate 40 moves in a direction approaching the first battery apparatus relative to the battery box 10. Herein, the first baffle plate 40 serves as a compression end of the first battery apparatus, such that the first battery apparatus is pressed, and the first battery apparatus is ensured to be pressed and stacked. After the first battery apparatus is pressed, the first baffle plate 40 and the battery box 10 are fixed to facilitate the fixing of the first battery apparatus. By arranging the first baffle plate 40 to be located between the second battery apparatus and the first battery apparatus, the first baffle plate 40 to serve as a fixing end of the second battery apparatus, and the second battery apparatus and the first battery apparatus to be disposed in the battery box 10 in the first direction, before the second battery apparatus is placed in the battery box 10, under the action of the first baffle plate 40, the first battery apparatus is pressed. That is, the second single battery 30 of the second battery apparatus is equivalent to being located outside the first battery apparatus, and the second single battery 30 does not move considerably. In this way, when the baffle plate presses the battery apparatus, the outermost battery is prevented from being excessively pressed, and that the performance of the battery pack is prevented from being affected. Further, the fixed position between the first baffle plate 40 and the battery box 10 is a predetermined compression position of the first battery apparatus. As the first baffle plate 40 functions as a separation, the battery apparatus is pressed twice, so that the compression process of the battery apparatus is divided into two times. By dividing the pressing into multiple stage, when the baffle plate presses the battery apparatus, the outermost single battery is prevented from being excessively pressed, and that the performance of the battery pack is prevented from being affected.

Herein, each of the first single batteries 20 and the second single battery 30 includes a cell and an electrolyte and acts as the smallest unit capable of performing electrochemical reactions such as charging/discharging. The cell refers to a unit formed by winding or laminating a stacked part, and the stacked part includes a first electrode, a separator, and a second electrode. When the first electrode is a positive electrode, the second electrode is a negative electrode. The polarities of the first electrode and the second electrode may be interchanged.

In an embodiment, each of the first single batteries 20 and the second single battery 30 is a laminated battery, which may be conveniently assembled and may further be processed to obtain a battery with a longer length.

To be specific, a cell 20 is a laminated cell. The cell 20 has first electrode pieces that are stacked on each other, second electrode pieces whose electrical properties are opposite to the first electrode pieces, and diaphragm pieces disposed between the first electrode pieces and the second electrode pieces. Therefore, multiple pairs of the first electrode pieces and the second electrode pieces are stacked to form the laminated cell.

Optionally, each of the first single batteries 20 and the second single battery 30 may be a wound battery. That is, the first electrode pieces, the second electrode pieces whose electrical properties are opposite to the first electrode pieces, and the diaphragm pieces disposed between the first electrode pieces and the second electrode pieces are wound to obtain a wound cell.

In an embodiment, the second battery apparatus includes a plurality of second single batteries 30, and the second single batteries are stacked in the first direction. After stacking of the first battery apparatus is completed, the first single batteries 20 may be stacked in sequence in the first direction to form the second battery apparatus, such that the stacking of the two battery apparatus, namely the first battery apparatus and the second battery apparatus, is implemented. The second single batteries 30 and the first single batteries 20 are both stacked in the first direction, and the two are stacked in the same direction, so a simple and convenient process is provided, and only a small stacking space is required.

It can be understood that the first baffle plate 40 is located between the first battery apparatus and the second battery apparatus. That is, the first baffle plate 40 is the common part of the two battery apparatuses, such that the stacking space of the two battery apparatuses in the first direction is saved, and improved space utilization is provided.

In an embodiment, as shown in FIG. 1 to FIG. 2, the battery pack further includes a second baffle plate 50. The second baffle plate 50 is connected to the battery box 10 and the second battery apparatus is located between the first baffle plate 40 and the second baffle plate 50, such that both the first baffle plate 40 and the second baffle plate 50 press the second battery apparatus. By arranging the second battery apparatus to be located between the first baffle plate 40 and the second baffle plate 50, the second battery apparatus is sandwiched between the first baffle plate 40 and the second baffle plate 50. The first baffle plate 40 and the second baffle plate 50 are the two end plates of the second battery apparatus in the first direction, and under the combined action of the first baffle plate 40 and the second baffle plate 50, the second battery apparatus is pressed. By arranging the second baffle plate 50 to be connected to the battery box 10, the second battery apparatus is fixed.

In an embodiment, the second baffle plate 50 is detachably connected to the battery box 10 to press the second battery apparatus through moving relative to the battery box 10.

Before the second battery apparatus is placed in the battery box 10, the first baffle plate 40 and the battery box 10 are already fixed. When the second single batteries 30 are stacked in sequence in the first direction, the first baffle plate 40 is equivalent to the fixing end, and the second battery apparatus is located between the first baffle plate 40 and the second baffle plate 50. By arranging the second baffle plate 50 to be detachably connected to the battery box 10, the second baffle plate 50 is not fixedly arranged but is movably arranged instead. The second baffle plate 50 may move relative to the battery box 10 in the first direction, and the second baffle plate 50 serves as the compression end of the second battery apparatus so that the second battery apparatus is ensured to be pressed.

It can be understood that in some embodiments, the second single batteries may be stacked in a second direction, and the second direction is perpendicular to the first direction. To be specific, the second direction is the length direction of the second single batteries 30, and herein, the second baffle plate 50 presses the second battery apparatus in the second direction.

In an embodiment, as shown in FIG. 1 to FIG. 2, the battery pack further includes a third baffle plate 60. The third baffle plate 60 is connected to the battery box 10 and the first battery apparatus is located between the first baffle plate 40 and the third baffle plate 60, such that both the first baffle plate 40 and the third baffle plate 60 press the first battery apparatus together. By arranging the first battery apparatus to be located between the first baffle plate 40 and the third baffle plate 60, the first battery apparatus is sandwiched between the first baffle plate 40 and the third baffle plate 60. The first baffle plate 40 and the third baffle plate 60 are the two end plates of the first battery apparatus in the first direction, and under the combined action of the first baffle plate 40 and the third baffle plate 60, the first battery apparatus is pressed. By arranging the third baffle plate 60 to be connected to the battery box 10, the first battery apparatus is ensured to be fixed.

In an embodiment, the third baffle plate 60 is fixedly connected to the battery box 10. If the third baffle plate 60 is not fixedly arranged relative to the battery box 10, when the first single batteries 20 abut against the third baffle plate 60, the first single batteries 20 may push the third baffle plate 60 to move, which is not conducive to the pressing of the first battery apparatus. By setting the third baffle plate 60 not to be movably arranged relative to the battery box 10, that is, setting the third baffle plate 60 to be fixedly arranged relative to the battery box 10, the third baffle plate 60 serves as the fixing end of the first battery apparatus and acts as a fixing point for the stacking of the first battery apparatus. Herein, one of the first single batteries 20 abuts against the third baffle plate 60, so that the third baffle plate 60 serves to limit the first single battery 20. The remaining first single batteries 20 are then stacked in sequence in the first direction, and the positional deviation of the first single batteries 20 is prevented from occurring in this way.

It should be noted that the third baffle plate 60 and the battery box 10 may be fixedly connected by welding.

It should be noted that the first single batteries 20 and the second single batteries 30 may be similar types of batteries or may be different types of batteries.

In an embodiment, as shown in FIG. 1 to FIG. 2, the battery box 10 includes a bottom plate 11 and a frame 12. The frame 12 surrounds the bottom plate 11, and the first baffle plate 40 is detachably connected to the frame 12. The bottom plate 11 is used to carry the first battery apparatus and the second battery apparatus, so that the first battery apparatus and the second battery apparatus are ensured to be supported. Through the arrangement of the frame 12 surrounding the bottom plate 11, the frame 12 serves to protect the sides of the first battery apparatus and the second battery apparatus, and side impact or collision on the battery apparatuses may thus be reduced.

It can be understood that the bottom plate 11 includes a body, a protective plate, and a liquid cooling plate that are superimposed. If the first baffle plate 40 and the bottom plate 11 are fixed, a bolt may penetrate the liquid cooling plate, and the heat dissipation effect of the battery apparatuses is thereby affected. By arranging the first baffle plate 40 to be detachably connected to the frame 12, it is equivalent to borrowing the frame 12 of the battery box 10 to fix the first baffle plate 40, the first baffle plate 40 is prevented from affecting the bottom plate 11 during connection. Further, the installation difficulty of the first baffle plate 40 is reduced, both time and effort are saved, and high assembly and production efficiency may thus be provided.

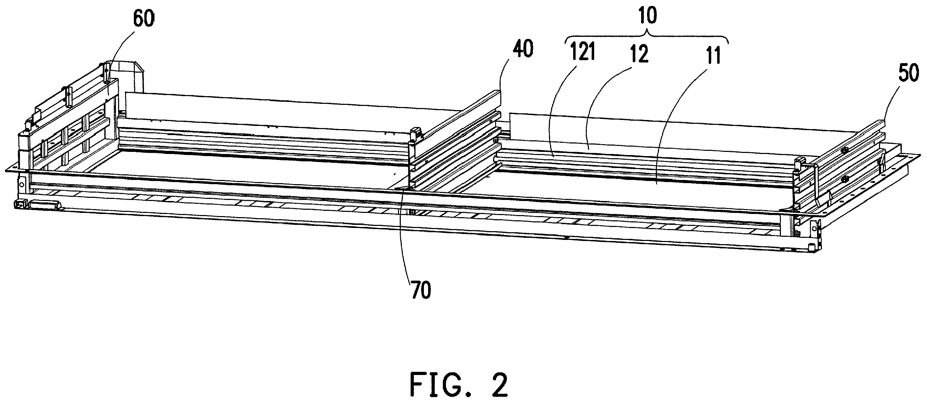

In an embodiment, as shown in FIG. 2 to FIG. 4, the battery pack also includes a connection piece 70. The connection piece 70 is connected to the frame 12, and the first baffle plate 40 is connected to the connection piece 70. If the first baffle plate 40 is directly fixed to the frame 12, it is difficult to connect the first baffle plate 40 to the frame 12 because the first baffle plate 40 also needs to bear the force of the first battery apparatus on the first baffle plate 40. Through arranging the connection piece 70 to be connected to the frame 12 and the first baffle plate 40 to be connected to the connection piece 70, the connection piece 70 serves as an intermediate connection between the first baffle plate 40 and the frame 12, which facilitates the fixing between the first baffle plate 40 and the frame 12. Strong operability is provided since a fixing installation point is provided through the connection piece 80.

In an embodiment, the connection piece 70 is fixedly connected to the frame 12, and the first baffle plate 40 is detachably connected to the connection piece 70. Before the first baffle plate 40 is installed, the connection piece 70 is fixedly connected to the frame 12. The first baffle plate 40 only needs to be connected to the connection piece 70 to be fixed to the frame 12, so that the first baffle plate 40 may be conveniently installed and detached. Further, since the connection piece 70 is fixedly connected to the frame 12, a hole is not required to be drilled on the frame 12, and the structural strength of the frame 12 is thus not affected.

In an embodiment, one side of the first baffle plate 40 facing the first battery apparatus is in limited contact with the connection piece 70. The side of the first baffle plate 40 facing the battery apparatus is connected to the connection piece 70.

It can be understood that, after the first single batteries 20 are placed in sequence in the first direction, the overall length of the first single batteries 20 in the first direction may exceed the connection piece 70. By arranging the side of the first baffle plate 40 facing the first battery apparatus to be in limited contact with the connection piece 70, the connection piece 70 provides a limiting point for the first baffle plate 40. The side surface of the connection piece 70 facing the first baffle plate 40 is the position where the first baffle plate 40 is required to compress the first battery apparatus in place, so as to prevent the first baffle plate 40 from applying an insufficient pressing force on the first battery apparatus and thus occupying a large space or from applying an excessively large force on the first battery apparatus and thus affecting the performance of the battery apparatus. By arranging the side of first baffle plate 40 facing the first battery apparatus to be connected to the connection piece 70, the first battery apparatus is ensured to be fixed.

In an embodiment, the frame 12 includes a reinforcement beam 121, and the connection piece 70 is connected to the reinforcement beam 12. The reinforcement beam 121 serves to improve the structural strength of a side beam. By arranging the connection piece 70 to be connected to the reinforcement beam 121, the connection position between the connection piece 70 and the side beam is the reinforcement beam 121. The reinforcement beam 121 serves to strengthen the connection position between the connection piece 70 and the side beam, so the fixing strength of connection is improved.

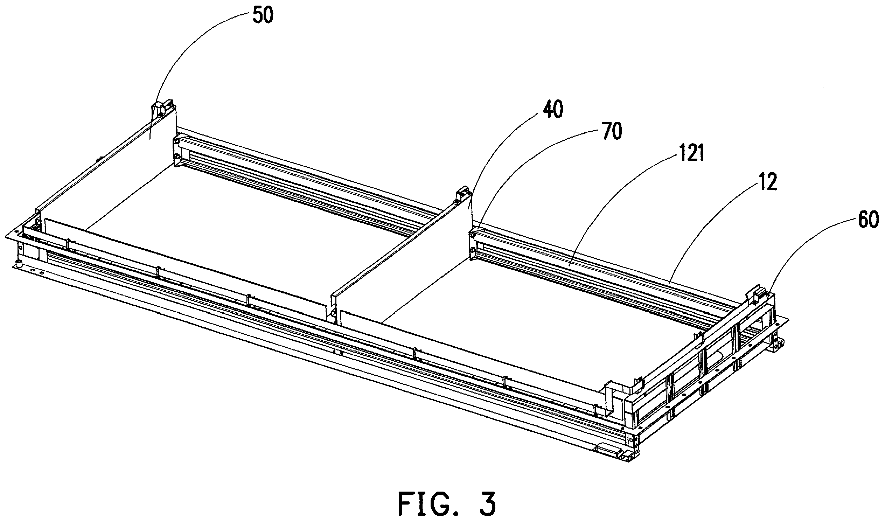

To be specific, in an embodiment, as shown in FIG. 3 to FIG. 4, the connection piece 70 includes a connection plate 701 and two side arms 702. The two side arms 702 are connected by the connection plate 701, and the two side arms 702 are attached to the first baffle plate 40 and the frame 12 and the bottom plate 11 of the battery box 10. The connection piece 70 is disposed at the top corner of the first battery apparatus. The first baffle plate 40, the bottom plate 11, and the frame 12 may be fixed by using one connection piece 70, it thus can be seen that a good fixing effect is provided through a simple structure.

It can be understood that, at least one of the two side arms 702 is bent in a direction approaching the bottom plate 11, so that the surface contact between the side arms 702 and the bottom plate 11 is achieved and contact area with the bottom plate 11 is increased.

Since the reinforcement beam 121 protrudes from and is disposed on the side of the frame 12 close to the first battery apparatus, according to the height of the reinforcement beam 121 protruding from the frame 12 and the shape of the reinforcement beam 121, at least one of the two side arms 702 is provided with a yielding groove 703 for yielding to the reinforcement beam 121. In some embodiments, the sizes of the yielding groove 703 and the reinforcement beam 121 are matched, and in this way, the yielding groove 703 and the reinforcement beam 121 may be engaged with each other, and the fixing effect between the connection piece 70 and the frame 12 is thus further improved.

In an embodiment, the cross section of the connection plate 701 is a triangular structure, and the structural strength of the connection piece 70 is ensured by utilizing the stable characteristics of the triangular structure. Therefore, the connection piece 70 may also be called a triangle.

In order to ensure the connection effect between the first baffle plate 40 and the connection piece 70, the first baffle plate 40 is provided with a first connection hole, and the connection piece 70 is provided with a second connection hole corresponding to the first connection hole. A fastener 90 is specifically a bolt, a screw, a rivet, etc., and the fastener 90 is inserted in the first connection hole and the second connection hole to achieve the detachable connection between the first baffle plate 40 and the connection piece 70.

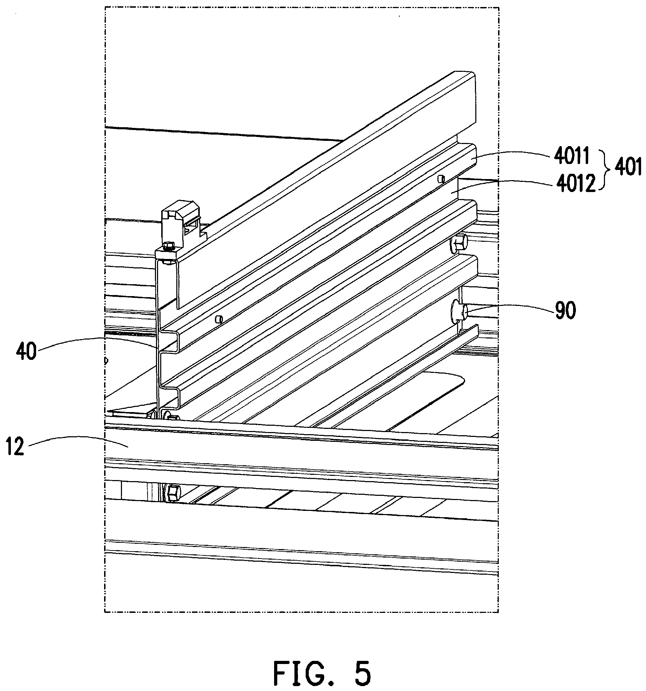

In an embodiment, as shown in FIG. 5, the first baffle plate 40 is connected to the battery box 10 through the connection piece 70 to fix the first single batteries 20. Herein, at least one of the first baffle plate 40 and the connection piece 70 is provided with a reinforcement portion 401 in a direction away from each other. The reinforcement portion 401 serves to strengthen the structure of the first baffle plate 40 or the connection piece 70 and is used to compensate for the lack of strength of the first baffle plate 40 or the connection piece 70, so that the fixing effect between the battery box 10 and the first single batteries 20 is ensured.

If the reinforcement portion 401 is disposed on one side of the first baffle plate 40 close to the connection piece 70, when the first baffle plate 40 and the connection piece 70 are fixedly connected, the reinforcement portion 401 may interfere with at least one of the first baffle plate 40 and the connection piece 70. By arranging at least one of the first baffle plate 40 and the connection piece 70 to be provided with the reinforcement portion 401 in a direction away from each other, that is, the reinforcement portion 401 is disposed on the side of the first baffle plate 40 away from the connection piece 70, when the first baffle plate 40 and the connection piece 70 are fixedly connected, the reinforcement portion 401 may not interfere with both the first baffle plate 40 and the connection piece 70. Further, to a certain extent, it is ensured that the side of the first baffle plate 40 contacting the connection piece 70 is a plane structure, so that the connection effect between the first baffle plate 40 and the connection piece 70 is ensured. Further, the connection welding seam of the reinforcement portion 401 may not be easily torn when the reinforcement portion 401 is pulled or is applied by a force, the risk of failure of the reinforcement portion 401 is thus avoided, and the reliability of the battery pack is improved.

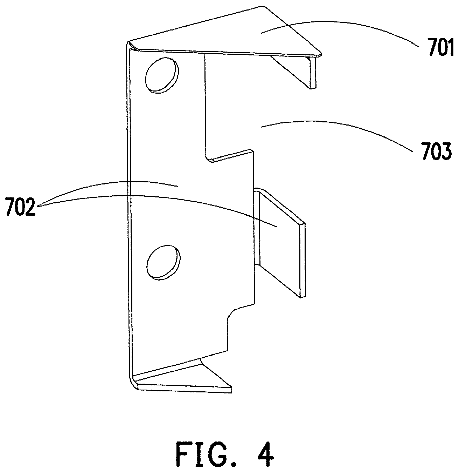

In an embodiment, as shown in FIG. 4 to FIG. 5, the reinforcement portion 40 includes a protruding portion 4011 and connecting portions 4012 disposed on both sides of the protruding portion 4011, the connecting portions 4012 are attached to the first baffle plate 40, and the protruding portion 4011 protrudes in a direction away from the connection piece 70 relative to the connecting portions 4012, and/or the reinforcement portion 40 includes the protruding portion 4011 and the connecting portions 4012 disposed on both sides of the protruding portion 4011, the connecting portion 4012 is attached to the connection piece 70, and the protruding portion 4011 protrudes in a direction away from the first baffle plate 40 relative to the connecting portions 4012.

If the reinforcement portion 401 is disposed on the first baffle plate 40, the two connecting portions 4012 are attached to the side surfaces of the first baffle plate 40, and the protruding portion 4011 protrudes towards the direction away from the connection piece 70. Herein, the protruding portion 4011 and the two connecting portions 4012 form a " 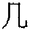 "-shaped structure, and the protruding portion 4011 serves to strengthen the structure of the first baffle plate 40.

If the reinforcement portion 401 is disposed on the connection piece 70, the two connecting portions 4012 are attached to the side surfaces of the connection piece 70, and the protruding portion 4011 protrudes towards the direction away from the first baffle plate 40. Herein, the protruding portion 4011 and the two connecting portions 4012 form a " 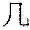 "-shaped structure, and the protruding portion 4011 serves to strengthen the structure of the connection piece 70.

It can be understood that the reinforcement portion 401 may also be provided on both the connection piece 70 and the first baffle plate 40 to strengthen the structures of both the connection piece 70 and the first baffle plate 40.

The connecting portions 4012 and the protruding portion 4011 are integrally formed, so the steps of part assembling are reduced, and the production costs are lowered. To be specific, the reinforcement portion 401 is made of a sheet metal material, and after repeated bending, the connecting portions 4012 and the protruding portion 4011 are formed, so only a simple production process is required, and the production costs are saved.

It should be noted that the structures of the first baffle plate 40 and the second baffle plate 50 are similar, and the difference is only in the positions of the first baffle plate 40 and the second baffle plate 50 relative to the battery box 10, so that detailed description of the structure of the second baffle plate 50 is not provided herein. The connection between the second baffle plate 50 and the battery box 10 may also be connected by the connection piece 70, and the specific connection form is similar to the connection between the first baffle plate 40 and the connection piece 70, so that detailed description of the specific connection between the second baffle plate 50 and the connection piece 70 is not provided herein.

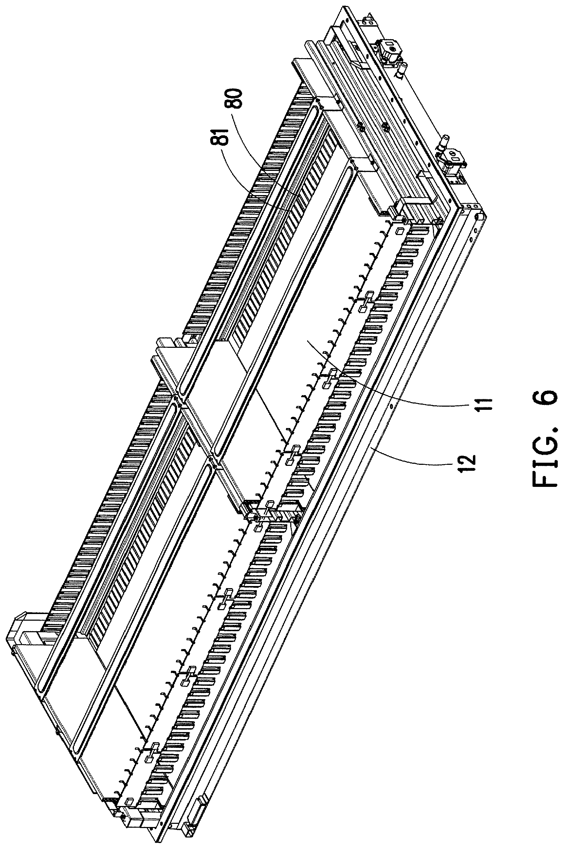

In an embodiment, as shown in FIG. 6, the battery pack further includes a support piece 80, the support piece 80 is disposed in the battery box 10, and the first battery apparatus is provided with the support piece 80. The first baffle plate 40 may drive at least one of the first single batteries 20 of the first battery apparatus to move relative to support piece 80 or the battery box 10, such that the first baffle plate 40 presses the first battery apparatus.

By arranging the support piece 80 to be disposed in the battery box 10 and the first battery apparatus to be provided with the support piece 80, the support piece 80 serves to support the first battery apparatus. By arranging the first baffle plate 40 to drive at least one of the first single batteries 20 of the first battery apparatus to move relative to support piece 80 or the battery box 10, the support piece 80 provides a moving path for the first battery apparatus to reduce the contact between the first battery apparatus and the battery box 10.

In an embodiment, as shown in FIG. 6, a spacing is provided for the support piece 80 corresponding to the two adjacent first battery apparatus and second battery apparatus. By arranging a spacing to be provided for the support piece 80 corresponding to the adjacent two battery apparatuses, when the first single batteries 20 are to be assembled, if the first baffle plate 40 presses the first battery apparatus, the first battery apparatus may move, and the spacing provides a certain activity space and buffer space for the installation of the first battery apparatus and serves as a reserved space. The movement of the first battery apparatus has a certain amount of activity, which facilitates the installation of the first battery apparatus and also reduces the risk of tearing and breaking of the support piece 80 under force.

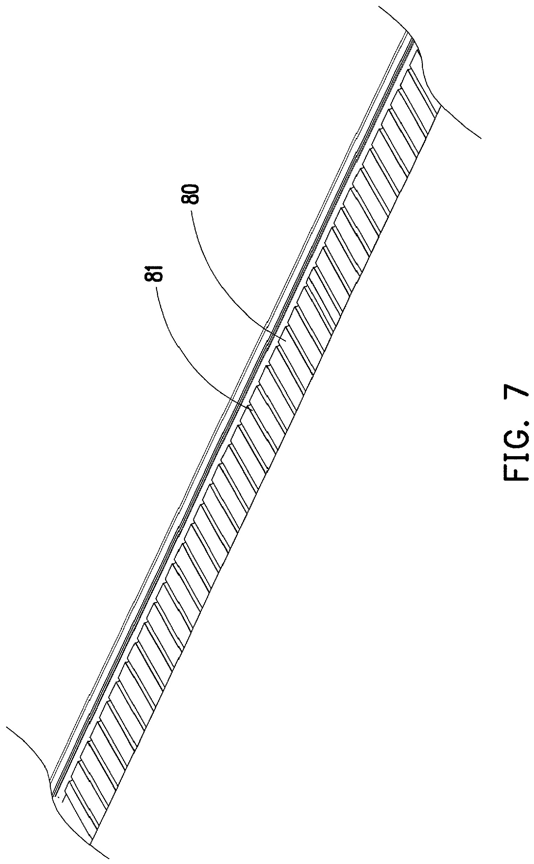

As shown in FIG. 7, for the same battery apparatus, the support piece 80 located on the same side of the battery apparatus may be an integral structure.

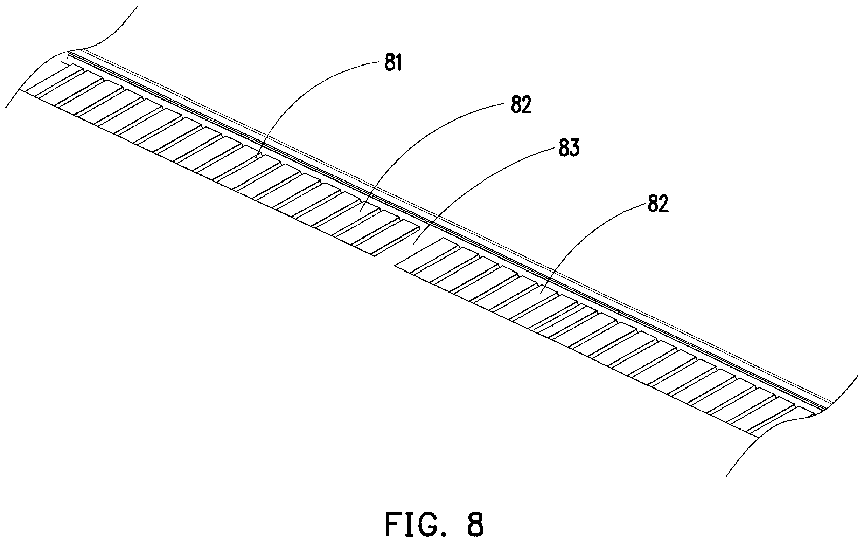

As shown in FIG. 8, the support piece 80 located on the same side of the first battery apparatus may be a split structure. To be specific, the support piece 80 located on the same side of the first battery apparatus includes a plurality of insulating segments 82 in the stacking direction of the first single batteries 20, and/or the support piece 80 located on the same side of the first battery apparatus includes the plurality of insulating segments 82 in the length direction of the first single batteries 20. In this way, it is equivalent to cutting the support piece 80 into a plurality of insulating segments 82. Compared to an insulating strip which has a larger size, since the size of each insulating segment 82 is smaller, the small-sized insulating segments 82 are easier to be formed and processed, and tolerance control may also be easily performed.

It should be noted that the insulating segments 82 may be coatings, such as ceramic materials such as alumina and zirconia.

In an embodiment, as shown in FIG. 8, a gap 83 is provided between two adjacent insulating segments 82. The two adjacent insulating segments 82 are not in close contact, but a specific gap 83 is provided between the two adjacent insulating segments 82. By arranging the gap 83 to be provided between adjacent two insulating segments 82, the gap 83 provides a certain movable space for the installation of the first single batteries 20 and serves as a reserved space. The movement of the first single batteries 20 has a certain amount of activity, which facilitates the installation of the first single batteries 20.

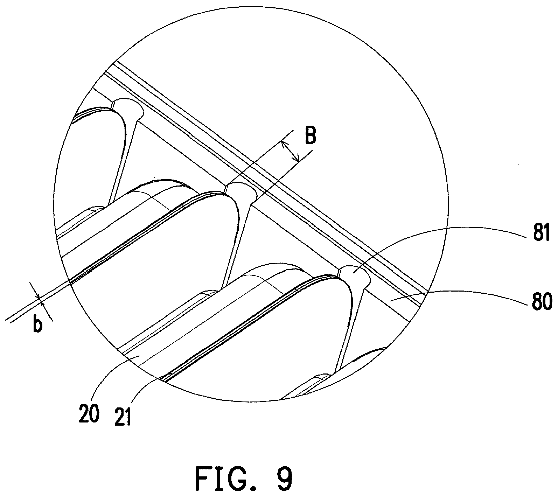

In an embodiment, as shown in FIG. 9, one of the support piece 80 and the first single batteries 20 is provided with a protruded edge structure 21 and the other one is provided with yielding openings 81. At least a portion of the protruded edge structure 21 extends into the corresponding yielding opening 81 to form the positioning structure. By arranging the protruded edge structure 21 to be matched with the yielding opening 81, the positioning of the first single batteries 20 during installation is implemented, so that the accuracy of installation of the first single batteries 20 is ensured.

To be specific, each of the second single batteries 30 includes a protruded edge structure 21, the support piece 80 is provided with the yielding openings 81, and at least a portion of the protruded edge structure 21 is disposed in the corresponding yielding opening 81. The thickness of the protruded edge structure 21 in the first direction is less than the width of each yielding opening 81 in the first direction, or the protruded edge structure 21 is engaged in the yielding opening 81.

Since a large amount of heat is generated during the use of the first single batteries 20, by arranging the protruded edge structures 21 to protrude along the circumferential edges of the first single batteries 20 and arranging the protruded edge structures 21 to protrude from the outer walls of the first single batteries 20, heat may be dissipated to the outside of the first single batteries 20 through the protruded edge structures 21, and heat dissipation is thereby achieved for the first single batteries 20. Each protruded edge structure 21 is an annular structure surrounding one first single battery 20, and the protruded edge structure 21 may also be called a flange. The matching of the protruded edge structures 21 and the yielding openings 81 may serve to position the first single batteries 20 during installation, and the yielding openings 81 may yield to the protruded edge structures of the first single batteries 20. If the material of the protruded edge structures 21 is soft, hard contact between the bottom plate 11 or other plates and the protruded edge structures 21 is avoided, so as to reduce the risk of deformation of the protruded edge structures 21. Further, by arranging the protruded edge structures 21 on the edges of the first single batteries 20, the protruded edge structures 21 increase the support surface of the first single batteries 20 and improve the installation stability of the first single batteries 20.

If the protruded edge structures 21 are engaged with the yielding openings 81, both the first single batteries 20 and the support piece 80 are fixedly arranged. When the first single batteries 20 are compressed, the first single batteries 20 may drive the support piece 80 to move relative to the battery box 10. Herein, the support piece 80 is equivalent to the walking foot of the first battery apparatus, which reduces the wear of the first battery apparatus.

If the thickness of each protruded edge structure 21 in the first direction is less than the width of each yielding opening 81 in the first direction, a slit is provided between the protruded edge structure 21 and the yielding opening 81. In other words, in the first stacking direction, if each yielding opening 81 has an opening width B and each protruded edge structure 21 has a thickness b, then B-b is the slit. By arranging the slits to be provided between the protruded edge structures 21 and the yielding openings 81, when the first single batteries 20 are swelled or pressed, the slits provide a certain movable space for the installation of the first single batteries 20 and serve as a reserved space. The movement of the first single batteries 20 has a certain amount of activity, which facilitates the installation of the first single batteries 20.

It should be noted that the slits are filled with a glue layer. After the position between the protruded edge structures 21 and the yielding openings 81 is fixed, the slits may be filled with a glue layer. The glue layer may fill the slits and also serves to fix the protruded edge structures 21 and the yielding openings 81. The glue layer may be thermally conductive glue, and the thermally conductive glue ensures reliable heat conduction between the protruded edge structures 21 and the bottom plate 11. The thermally conductive glue may also be ultra-high temperature thermally conductive glue, which can adapt to a high-temperature environment, and does not fail even when the first single batteries 20 release a large amount of heat. The thermally conductive glue may also be insulating glue, and the protruded edge structures 21 and the support piece 80 are electrically contacted and short-circuited.

In an embodiment, the opening width of each yielding opening 81 is B and the thickness of each protruded edge structure 21 is b, where 2mm ≤ B- b≤ 10mm. B-b is 2mm, 3mm, 4mm, 5mm, 6mm, 7mm, 8mm, 9mm, 10mm, etc. If B-b<2 mm, the difference between the opening width each yielding opening 81 and the thickness of each protruded edge structure 21 cannot be excessively small, otherwise, when the first single batteries 20 are being assembled, the movement space that can be provided for the first single batteries 20 may be relatively small, and it is difficult to meet the movement requirements of the first single batteries 20. If B-b > 10mm, the difference between the opening width of each yielding opening 81 and the thickness of each protruded edge structure 21 cannot be excessively large, otherwise, when the first single batteries 20 are being assembled, each protruded edge structure 21 may be easily detached from the yielding opening 81, and it is difficult to ensure a favorable positioning effect.

In an embodiment, the support piece 80 may be movably disposed relative to the battery box 10, or the support piece 80 is fixed to the battery box 10.

To be specific, the insulating segments 82 of the support piece 80 are fixedly connected to the bottom plate 11 of the battery box 10. It can be understood that the support piece 80 and the battery box 10 are relatively fixed to ensure the fixing effect provided by the support piece 80. When the first single batteries 20 are being assembled, since the support piece 80 is fixed relative to the bottom plate 11, if the first baffle plate 40 presses the first battery apparatus, the first single batteries 20 may move as the pressing amount increases. Through the slits between the openings of the yielding openings 81 and the protruded edge structures 21, a moving space is provided for the movement of the first single batteries 20, and the position adjustment of the first single batteries 20 is thereby implemented.

To be specific, at least one of the plurality of insulating segments 82 of the support piece 80 is movable relative to the bottom plate 11 in the stacking direction of the first single batteries 20. It can be understood that the support piece 80 and the bottom plate 11 are not necessarily limited to a fixed arrangement, and the plurality of insulating segments 82 of the support piece 80 are at least partially fixed to the first single batteries 20. When the first single batteries 20 are being assembled, the end plate may press the first battery apparatus, and the first single batteries 20 may move as the pressing amount increases. Since the support piece 80 and the bottom plate 11 are not fixedly fixed, with the movement of the first single batteries 20, the first single batteries 20 drive the support piece 80 to slightly move relative to the bottom plate 11 through the positioning structure. In this way, when the first single batteries 20 are required to move considerably, the risk of tearing and breaking of the support piece 80 or the protruded edge structures 21 due to a large force is avoided.

In an embodiment, if the insulating segments 82 may move relative to the bottom plate 11, the slits are provided between the protruded edge structures 21 and the yielding openings 81, or the protruded edge structures 21 are engaged with the yielding openings 81. When the first single batteries 20 move relative to the bottom plate 11, the slits provide a certain space for the compression of the first single batteries 20 or have a small effect when the protruded edge structures 21 are engaged with the yielding openings 81, and the first single batteries 20 and the insulating segments 82 form an integral structure. With the movement of the first single batteries 20, the insulating segments 82 also move accordingly, so as to avoid the risk of tearing and breaking of the insulating segments 82 due to a large force.

The present embodiment further provides a battery cluster suitable for various charging and discharging devices. The battery cluster includes the abovementioned battery pack.

By arranging the first baffle plate 40 to be detachably connected to the battery box 10 to press the first battery apparatus through moving relative to the battery box 10, the first baffle plate 40 is not fixedly disposed relative to the battery box 10 but is movably disposed relative to the battery box 10 instead. After the first single batteries 20 of the first battery apparatus are stacked in the first direction, the first baffle plate 40 moves in a direction approaching the first battery apparatus relative to the battery box 10. Herein, the first baffle plate 40 serves as the compression end of the first battery apparatus, such that the first battery apparatus is pressed, and the first battery apparatus is ensured to be pressed and stacked. After the first battery apparatus is pressed, the first baffle plate 40 and the battery box 10 are fixed to facilitate the fixing of the first battery apparatus. By arranging the first baffle plate 40 to be located between the second battery apparatus and the first battery apparatus, the first baffle plate 40 to serve as the fixing end of the second battery apparatus, and the second battery apparatus and the first battery apparatus to be disposed in the battery box 10 in the first direction, before the second battery apparatus is placed in the battery box 10, under the action of the first baffle plate 40, the first battery apparatus is pressed. That is, the second single battery 30 of the second battery apparatus is equivalent to being located outside the first battery apparatus, and the second single battery 30 does not move considerably. In this way, when the baffle plate presses the battery apparatus, the outermost battery is prevented from being excessively pressed, and that the performance of the battery pack is prevented from being affected.

In an embodiment, the battery cluster further includes an energy storage rack and at least one battery insertion box. At least one battery pack is correspondingly arranged in at least one battery insertion box, and the battery insertion box is inserted into the energy storage rack. The numbers of battery insertion box and battery pack to be placed may be adjusted according to actual use needs and the capacity of the energy storage rack.

By arranging the battery insertion box to be inserted in the energy storage rack, the advantages of convenient assembly and stable placement of the battery insertion box are provided. By correspondingly arranging the at least one battery pack to be located in the at least one battery insert box, the battery insert box provides an accommodation space for the battery pack and serves to protect and support the battery pack.

To be specific, the energy storage rack includes a frame and a placement rack, the frame includes an upright column, and the upright column is connected to the placement rack. When a plurality of battery insertion boxes are required to be placed, a plurality of spaced placement racks are connected from top to bottom on the upright column of the frame. By dividing the inner space of the frame to form a plurality of accommodation cavities by the placement racks, one battery insertion box may be inserted in one accommodation cavity, and the battery insertion box is supported by the placement rack.

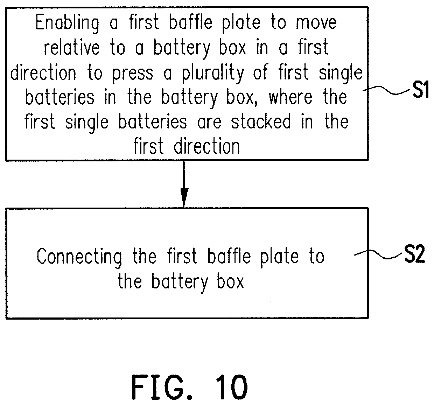

The present embodiment further provides a method of assembling a battery pack, and as shown in FIG. 10, the method includes the following steps.

In S1, the first baffle plate 40 is enabled to move relative to the battery box 10 in the first direction to press the plurality of first single batteries 20 in the battery box 10, and the first single batteries 20 are stacked in the first direction.

In S2, the first baffle plate 40 is connected to the battery box 10.

In the method of assembling the battery pack provided by the present embodiment, after the first single batteries 20 of the first battery apparatus are stacked in the first direction, the first baffle plate 40 moves in a direction approaching the first battery apparatus relative to the battery box 10. Herein, the first baffle plate 40 serves as the compression end of the first battery apparatus, such that the first battery apparatus is pressed, and the first battery apparatus is ensured to be pressed and stacked. After the first battery apparatus is pressed, the first baffle plate 40 and the battery box 10 are fixed to facilitate the fixing of the first battery apparatus.

In an embodiment, before the first single batteries 20 are stacked in the first direction, the third baffle plate 60 is fixedly connected to the battery box 10, such that both the first baffle plate 40 and the third baffle plate 60 press the first battery apparatus.

If the third baffle plate 60 is not fixedly arranged relative to the battery box 10, when the first single batteries 20 abut against the third baffle plate 60, the first single batteries 20 may push the third baffle plate 60 to move, which is not conducive to the pressing of the first battery apparatus. By setting the third baffle plate 60 not to be movably arranged relative to the battery box 10, that is, before the first single batteries 20 are stacked in the first direction, the third baffle plate 60 is fixedly connected to the battery box 10. The third baffle plate 60 serves as the fixing end of the first battery apparatus and acts as the fixing point for the stacking of the first battery apparatus. Herein, one of the first single batteries 20 abuts against the third baffle plate 60, so that the third baffle plate 60 serves to limit the first single battery 20. The remaining first single batteries 20 are then stacked in sequence in the first direction, and the positional deviation of the first single batteries 20 is prevented from occurring in this way. For the first battery apparatus, the third baffle plate 60 is the fixing end, and the first baffle plate 40 is the compression end. Under the combined action of the first baffle plate 40 and the third baffle plate 60, the third baffle plate 60 pushes the first single batteries 20 to move in a direction approaching the third baffle plate 60, so that the first single batteries 20 are ensured to contact one another, and the pressing process is thereby completed.

In an embodiment, the step of connection the first baffle plate 40 to the battery box 10 includes the following steps.

The connection piece 70 is connected to the frame 12 of the battery box 10.

The side of the first baffle plate 40 facing the first battery apparatus is in limited contact with the connection piece 70.

The first baffle plate 40 is connected to the connection piece 70.

Before the first baffle plate 40 is installed, the connection piece 70 is fixedly connected to the frame 12 first. The first baffle plate 40 only needs to be connected to the connection piece 70 to be fixed to the frame 12, so the first baffle plate 40 may be conveniently installed and detached. Further, since the connection piece 70 is fixedly connected to the frame 12, a hole is not required to be drilled on the frame 12, and the structural strength of the frame 12 is thus not affected. By arranging the side of the first baffle plate 40 facing the first battery apparatus to be in limited contact with the connection piece 70, the connection piece 70 provides a limiting point for the first baffle plate 40. The side surface of the connection piece 70 facing the first baffle plate 40 is the position where the first baffle plate 40 is required to compress the first battery apparatus in place, so as to prevent the first baffle plate 40 from applying an insufficient pressing force on the first battery apparatus and thus occupying a large space or from applying an excessively large force on the first battery apparatus and thus affecting the performance of the battery apparatus. By arranging the side of first baffle plate 40 facing the first battery apparatus to be connected to the connection piece 70, the first battery apparatus is ensured to be securely fixed.

In an embodiment, a side of the first baffle plate 40 facing away from the first single batteries 20 is provided with a plurality of second batteries, and the second batteries are stacked in the first direction. By arranging the plurality of second batteries to be located on the side of the first baffle plate 40 facing away from the first single batteries 20, the first baffle plate 40 is located between the second battery apparatus and the first battery apparatus, and the first baffle plate 40 acts as the fixing end of the second battery apparatus. Before the second battery apparatus is placed in the battery box 10, under the action of the first baffle plate 40, the first battery apparatus is pressed. That is, the second single battery 30 of the second battery apparatus is equivalent to being located outside the first battery apparatus, and the second single battery 30 does not move considerably. In this way, when the baffle plate presses the battery apparatus, the outermost battery is prevented from being excessively pressed, and that the performance of the battery pack is prevented from being affected.

In an embodiment, the method of assembling the battery pack further includes the following steps.

The second baffle plate 50 is enabled to move relative to the battery box 10 in the first direction to press the second batteries.

The second baffle plate 50 is connected to the battery box 10.

By arranging the second baffle plate 50 to move relative to the battery box 10 in the first direction, the second baffle plate 50 is not fixedly arranged but is movably arranged instead. The second baffle plate 50 serves as the compression end of the second batteries 20, so that the second battery apparatus is ensured to be pressed. After the second battery apparatus is compressed, by arranging the second baffle plate 50 to be connected to the battery box 10, the second battery apparatus is fixed, and the second battery apparatus is thereby locked.

In an embodiment, after the first baffle plate 40 is connected to the battery box 10, the second baffle plate 50 is enabled to move relative to the battery box 10 in the first direction.

By arranging the first baffle plate 40 to be connected to the battery box 10, the first baffle plate 40 and the battery box 10 are fixed. By arranging the second single batteries 30 to be stacked in sequence in the first direction, the first baffle plate 40 serves as the fixing end. After the second single batteries 30 are stacked in the first direction, the second baffle plate 50 moves relative to the battery box 10 in the first direction, and the second baffle plate 50 acts as the compression end of the second battery apparatus, so that the second battery apparatus is ensured to be pressed.

In an embodiment, the method of assembling the battery pack further includes the following steps.

After the first baffle plate 40 is connected to the battery box 10,
conductive pieces are connected to the first single batteries 20.

If the single batteries are pre-connected to the conductive pieces first and are then placed into the battery box 10, the conductive pieces may interfere with the battery box 10, making it difficult to place the single batteries into the box. By connecting the conductive pieces to the first single batteries 20 after connecting the first baffle plate 40 to the battery box 10, interference between the conductive piece and the battery box 10 is prevented from occurring, the difficulty of placement into the box is lowered, and the assembly production efficiency is improved.

To be specific, each conductive piece is a busbar, and the terminals of two adjacent single batteries are electrically connected to each other through the conductive piece, so as to realize the series-parallel connection of the single batteries in the battery apparatus.

It can be understood that the conductive pieces may be connected to the first single batteries 20 after the first baffle plate 40 is connected to the battery box 10, and the conductive pieces may be connected onto the second single batteries 30 after the second baffle plate 50 is connected to the battery box 10. Alternatively, the first baffle plate 40 is connected to the battery box 10 first, and the conductive pieces are connected onto both the first single batteries 20 and the second single batteries 30 after the second baffle plate 50 is connected to the battery box 10, that is, the conductive pieces are installed on the single batteries uniformly.

In an embodiment, after the conductive pieces are installed, the method of assembling the battery pack further includes the following steps.

A signal acquisition apparatus is electrically connected to the first battery apparatus and the second battery apparatus.

An insert is inserted into the signal acquisition apparatus.

By electrically connecting the signal acquisition apparatus to the first battery apparatus and the second battery apparatus, performance indicators such as electric quantity and temperature of the battery apparatuses may be collected, so that the battery apparatuses may be detected. By inserting the insert into the signal acquisition apparatus, these performance indicators may be outputted, and monitoring may be implemented.

In an embodiment, in the method of assembling the battery pack, after the insert is inserted into the signal acquisition apparatus, box covers of the batteries are connected to the battery box 10. By arranging the box covers of the batteries to be connected to the battery box 10, the battery apparatuses are packaged. Further, the insert and the signal acquisition apparatus are not exposed, so that isolation and protection are achieved.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery pack, comprising:
a battery box (10);
a first battery apparatus, comprising a plurality of first single batteries (20) stacked in a first direction;
a second battery apparatus, comprising a second single battery (30), wherein the second battery apparatus and the first battery apparatus are disposed in the battery box (10) in the first direction; and
a first baffle plate (40), located between the second battery apparatus and the first battery apparatus;
wherein the first baffle plate (40) is detachably connected to the battery box (10) to press the first battery apparatus through moving relative to the battery box (10).

2. The battery pack according to claim 1, wherein the second battery apparatus comprises a plurality of second single batteries (30),
wherein the second single batteries (30) are stacked in the first direction.

3. The battery pack according to claim 2, further comprising:
a second baffle plate (50), connected to the battery box (10), wherein the second battery apparatus is located between the first baffle plate (40) and the second baffle plate (50), such that both the first baffle plate (40) and the second baffle plate (50) press the second battery apparatus.

4. The battery pack according to claim 3, wherein the second baffle plate (50) is detachably connected to the battery box (10) to press the second battery apparatus through moving relative to the battery box (10).

5. The battery pack according to claim 1, further comprising:
a third baffle plate (60), connected to the battery box (10), wherein the first battery apparatus is located between the first baffle plate (40) and the third baffle plate (60), such that both the first baffle plate (40) and the third baffle plate (60) press the first battery apparatus.

6. The battery pack according to claim 5, wherein the third baffle plate (60) is fixedly connected to the battery box (10).

7. The battery pack according to claim 1, wherein the battery box (10) comprises:
a bottom plate (11); and
a frame (12), arranged around the bottom plate (11), wherein the first baffle plate (40) is detachably connected to the frame (12).

8. The battery pack according to claim 7, further comprising:
a connection piece (70), connected to the frame (12), wherein the first baffle plate (40) is connected to the connection piece (70).

9. The battery pack according to claim 8, wherein the connection piece (70) is fixedly connected to the frame (12), wherein the first baffle plate (40) is detachably connected to the connection piece (70).

10. The battery pack according to claim 9, wherein one side of the first baffle plate (40) facing the first battery apparatus is in limited contact with the connection piece (70),
wherein the side of the first baffle plate (40) facing the first battery apparatus is connected to the connection piece (70).

11. The battery pack according to claim 8, wherein the frame (12) comprises a reinforcement beam (121), and the connection piece (70) is connected to the reinforcement beam (121).

12. The battery pack according to claim 1, further comprising:
a support piece (80), disposed in the battery box (10), wherein the first battery apparatus is provided with the support piece (80),
wherein the first baffle plate (40) drives at least one of the first single batteries (20) of the first battery apparatus to move relative to the support piece (80) or the battery box (10), such that the first baffle plate (40) presses the first battery apparatus.

13. The battery pack according to claim 12, wherein the support piece (80) is movably disposed relative to the battery box (10), or the support piece (80) is fixed to the battery box (10).

14. The battery pack according to claim 13, wherein each of the first single batteries (20) comprises a protruded edge structure (21), the support piece (80) is provided with yielding openings (81), and at least a portion of the protruded edge structure (21) is disposed in the corresponding yielding opening (81),
wherein a thickness of the protruded edge structure (21) in the first direction is less than a width of each yielding opening (81) in the first direction, or the protruded edge structure (21) is engaged in the yielding opening (81).

15. A method of assembling a battery pack, comprising:
enabling a first baffle plate (40) to move relative to a battery box (10) in a first direction to press a plurality of first single batteries (20) in the battery box (10), wherein the first single batteries (20) are stacked in the first direction; and
connecting the first baffle plate (40) to the battery box (10).

16. The method of assembling the battery pack according to claim 15, wherein the step of connecting the first baffle plate (40) to the battery box (10) further comprises:
enabling one side of the first baffle plate (40) facing the first single batteries (20) to be in limited contact with a connection piece (70) when the first baffle plate (40) presses the first single batteries (20); and
connecting the side of the first baffle plate (40) facing the first single batteries (20) to the connection piece (70).

17. The method of assembling the battery pack according to claim 16, further comprising: connecting the connection piece (70) to a frame (12) of the battery box (10) before the first baffle plate (40) presses the first single batteries (20).

18. The method of assembling the battery pack according to claim 15, wherein one side of the first baffle plate (40) facing away from the first single batteries (20) is provided with a plurality of second single batteries (30), and the second single batteries (30) are stacked in the first direction.

19. The method of assembling the battery pack according to claim 18, further comprising:
enabling a second baffle plate (50) to move relative to the battery box (10) in the first direction to press the second single batteries (30); and
connecting the second baffle plate (50) to the battery box (10).

20. The method of assembling the battery pack according to claim 19, further comprising: enabling the second baffle plate (50) to move relative to the battery box (10) in the first direction after connecting the first baffle plate (40) to the battery box (10).

21. The method of assembling the battery pack according to claim 15, further comprising: fixedly connecting a third baffle plate (60) to the battery box (10) before the first single batteries (20) are stacked in the first direction, such that both the first baffle plate (40) and the third baffle plate (60) press the first single batteries (20).

22. The method of assembling the battery pack according to claim 15, further comprising:
after connecting the first baffle plate (40) to the battery box (10),
connecting conductive pieces to the first single batteries (20).

23. A battery cluster, comprising the battery pack according to any one of claims 1-14.
